# EUROPÄISCHE PATENTSCHRIFT

(11) **EP 3 494 023 B1**
(45) Veröffentlichungstag und Bekanntmachung des Hinweises auf die Patenterteilung: **23.06.2021**
(21) Anmeldenummer: 17798113.1
(22) Anmeldetag: 24.10.2017
(51) Int. Cl.: B61F 1/08, F16B 5/02, F16B 5/06, F16B 19/02

(54) **LANGTRÄGERANORDNUNG FÜR EINEN WAGENKASTEN EINES FAHRZEUGS**
SOLE BAR ARRANGEMENT FOR A BODY OF A VEHICLE
AGENCEMENT DE LONGERON POUR UNE CAISSE DE WAGON DE VÉHICULE

(30) Priorität: 27.10.2016 AT 509832016
(43) Veröffentlichungstag der Anmeldung: 12.06.2019
(73) Patentinhaber: Siemens Mobility Austria GmbH, 1210 Wien (AT)
(72) Erfinder: BRÜCKLER, Ewald, 8055 Graz (AT); ECKHART, Rupert, 8072 Fernitz (AT); GROSZSCHÄDL, Roman, 8072 Fernitz (AT); WINDHAGER, Johannes, 8152 Södingberg (AT)
(74) Vertreter: Deffner, Rolf
(86) Internationale Anmeldenummer: PCT/EP2017/077135
(87) Internationale Veröffentlichungsnummer: WO 2018/077861

(56) Entgegenhaltungen:
- EP-A1- 1 340 662
- WO-A1-2016/135782
- DE-A1- 3 309 736
- DE-A1- 3 823 418
- DE-U1- 29 614 089

## Beschreibung

Die Erfindung betrifft eine Langträgeranordnung für einen Wagenkasten eines Fahrzeugs, insbesondere eines Schienenfahrzeugs.

Geräte wie beispielsweise Klimaanlagen, Fäkalienbehälter, Batterien, Druckluftmodule etc. sind häufig unter dem Wagenkasten eines Fahrzeugs, insbesondere Schienenfahrzeugs, d.h. unterflur angeordnet.
Sie sind an Hängevorrichtungen, die mit Langträgern verschweißt sind, gekoppelt.

Aus dem Stand der Technik ist die EP 1 752 250 B1 bekannt. Darin wird ein Laserschweißverfahren sowie geschweißte Verbindungen an Außenplatten und Strukturbauteilen von Wagenkästen für Schienenfahrzeuge beschrieben. Hängevorrichtungen, die für die Kopplung von Geräten an den Wagenkasten form- und kraftschlüssig über einen Langträger mit dem Wagenkasten verbunden sind, werden nicht offenbart.

Weiterhin zeigt die DE 10 2014 113 829 A1 ein modulares Befestigungssystem für die Verbindung von Unterflurkomponenten mit Wagenkästen von Schienenfahrzeugen über Befestigungselemente.
Die Schnittstellen zwischen den Befestigungselementen und dem Wagenkasten sind nicht im Detail offenbart. Eine kombinierte form- und kraftschlüssige Verbindung zwischen den Befestigungselementen und dem Wagenkasten ist nicht beschrieben.
Weiterhin ist kein Langträger mit einem Lochraster für die Kopplung der Unterflurkomponenten an den Langträger offenbart.

Die WO 2016/135782 A1 offenbart eine Haltevorrichtung für ein Schienenfahrzeug, welche zur Montage von Unterflurgeräten mit einem Langträger des Schienenfahrzeugs verschraubt ist. Die Haltevorrichtung weist in einer Seitenansicht eine L-Form auf.
Ferner beschreibt die DE 33 09 736 A1 ein Untergestell für ein Schienenfahrzeug, bei welchem ein als Stahlprofilträger ausgebildeter Langträger mittels einer Niet- oder Schweißverbindung an eine Bodenplatte gekoppelt ist. Die Bodenplatte weist in einem Kontaktbereich zu dem Langträger eine L-Form auf.

Der Erfindung liegt daher die Aufgabe zugrunde, eine gegenüber dem Stand der Technik verbesserte Langträgeranordnung anzugeben. Erfindungsgemäß wird diese Aufgabe gelöst mit einer Langträgeranordnung der eingangs genannten Art, bei der zumindest ein Langträger mit einem Lochraster sowie zumindest eine zu dem Lochraster schnittstellengleich gelochte Hängevorrichtung, die einen U-förmigen Querschnitt sowie eine U-förmige Kontur aufweist, vorgesehen sind, wobei die zumindest eine Hängevorrichtung formschlüssig und kraftschlüssig mit dem zumindest einen Langträger verbunden ist und im Bereich einer Kontaktfläche auf dem Langträger aufliegt.
Durch die schnittstellengleiche Ausführung des Langträgers und der Hängevorrichtung ergibt sich eine große Flexibilität hinsichtlich Art und Anzahl von über die Hängevorrichtung mit dem Wagenkasten zu koppelnder Geräte. Es brauchen lediglich die Schnittstellen (z.B. Bohrbilder) zwischen den Hängevorrichtungen und den Geräten aneinander angepasst werden. Der Langträger und sein Lochraster bleiben auch bei Änderung der Unterflurbelegung eines bereits bestehenden Fahrzeugs mit Geräten unverändert.
Ferner können Wagenkasten-Plattformen mit unterschiedlichen Unterflurbelegungen angeboten werden.
Weiterhin wird der Fertigungsprozess des Wagenkastens vereinfacht und beschleunigt, da zwischen dem Langträger und den Hängevorrichtungen keine Schweißverbindungen sondern form- und kraftschlüssige Verbindungen vorgesehen sind. Es sind keine Vorrichtungsrahmen, wie sie bei Schweißvorgängen für ein Positionieren der Hängevorrichtungen bezüglich des Langträgers vorzusehen wären, erforderlich. Hierdurch wird ein Kostenvorteil im Hinblick auf Arbeitsvorbereitung und Fertigung erzielt.
Darüber hinaus kommt es aufgrund des Verzichts auf Schweißverbindungen zu keinen schädlichen thermischen Verformungen (Schweißverzug) in dem Langträger. Eine im Zuge des Fertigungsprozesses durchgeführte Kaltverfestigung des Langträgers wird dadurch auch nach der Montage von Hängevorrichtungen auf dem Langträger beibehalten.

Günstig ist es, wenn die formschlüssige Verbindung zwischen der zumindest einen Hängevorrichtung und dem zumindest einen Langträger zumindest in Richtung einer Hochachse vorgesehen ist.
Bei beispielsweise vertikaler Ausrichtung der Hochachse und Ausführung der Hängevorrichtung als Haken, der auf einem L-förmigen Bereich des Langträgers aufgesetzt ist, ergibt sich der Vorteil einer Redundanz der formschlüssigen Verbindung zu der kraftschlüssigen Verbindung in folgender Weise: Versagt die kraftschlüssige Verbindung, wird die Hängevorrichtung aufgrund der formschlüssigen Verbindung dennoch auf dem Langträger gehalten.

Eine vorteilhafte Ausgestaltung wird erzielt, wenn die zumindest eine Hängevorrichtung zumindest eine erste Versteifungsrippe aufweist.
Durch diese Maßnahmen wird ein Leichtbauprinzip verwirklicht und eine Gewichtsreduktion der Hängevorrichtung erzielt.

Eine günstige Lösung ergibt sich, wenn das zumindest eine Gerät formschlüssig und kraftschlüssig zumindest in Richtung einer zweiten Längsachse mit der zumindest einen Hängevorrichtung verbunden ist.
Durch die Maßnahme einer form- und kraftschlüssigen Verbindung zwischen dem Gerät und der Hängevorrichtung wird der Vorteil einer Redundanz erzielt. Versagt die kraftschlüssige Verbindung, wird das Gerät aufgrund der formschlüssigen Verbindung dennoch auf der Hängevorrichtung gehalten.

Nachfolgend wird die Erfindung anhand von Ausführungsbeispielen näher erläutert.
Es zeigen beispielhaft:
- Fig. 1:: Einen Seitenriss einer erfindungsgemäßen Langträgeranordnung mit einem Langträger, einer Hängevorrichtung sowie einem mit der Hängevorrichtung verbundenen Gerät,
- Fig. 2:: Einen Schrägriss einer erfindungsgemäßen Langträgeranordnung mit einem Langträger, einer Hängevorrichtung sowie einem mit der Hängevorrichtung verbundenen Gerät, und
- Fig. 3:: Einen Schrägriss einer Hängevorrichtung einer erfindungsgemäßen Langträgeranordnung.

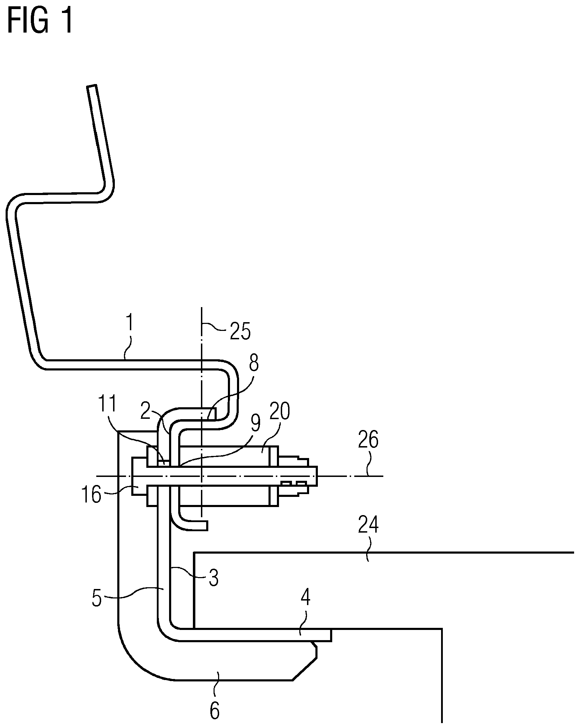

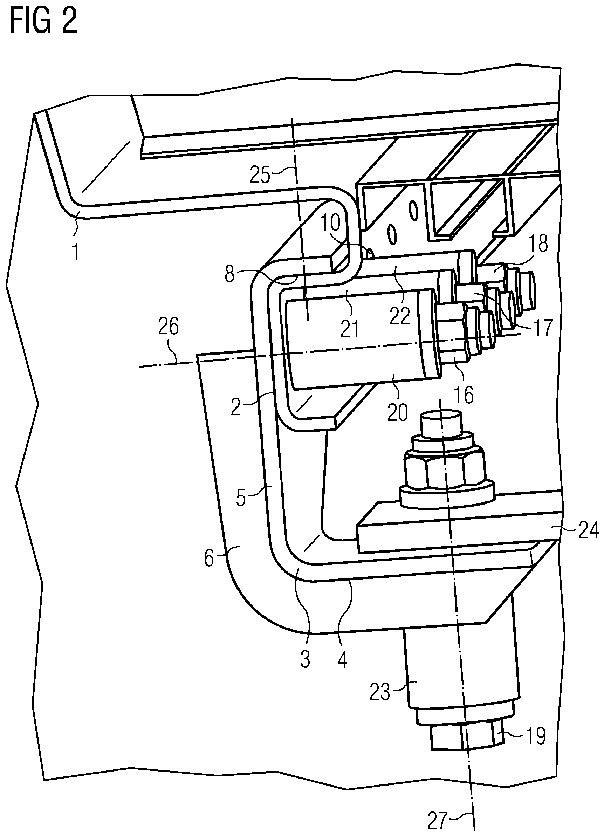

Fig. 1 zeigt eine beispielhafte Ausführungsvariante einer erfindungsgemäßen Langträgeranordnung als Seitenriss.
Ein Langträger 1 ist mit einer nicht dargestellten Seitenwand eines Wagenkastens eines Schienenfahrzeugs verbunden. An einer Innenseite des Wagenkastens ist der Langträger 1 an Steher der Seitenwand geheftet, an einer Außenseite mit der Seitenwand verschweißt.
Der Langträger 1 ist in Stahl ausgeführt, seine Geometrie weist in einem Querschnitt annähernd eine Doppel-S-Form mit rechtwinklig und schräg zueinander angeordneten, geraden sowie gerundeten Abschnitten auf.
Erfindungsgemäß ist es auch möglich, dass der Langträger in Aluminium ausgeführt ist.
Auf dem Langträger ist ein Lochraster mit einer ersten Bohrung 9 sowie, in Fig. 2 dargestellt, einer zweiten Bohrung 10 und weiteren Bohrungen, die entlang einer Geraden auf einer Seitenfläche 2 des Langträgers 1 ausgestanzt sind, angeordnet.
Erfindungsgemäß ist auch möglich, dass die Bohrungen mittels Laser gefertigt werden.
Weiterhin ist es auch vorstellbar, statt Bohrungen Langlöcher etc. anzuordnen.
Mit dem Langträger 1 form- und kraftschlüssig verbunden ist eine Hängevorrichtung 3, die in Stahl ausgeführt ist und einen U-förmigen Querschnitt mit geraden sowie gerundeten Abschnitten aufweist. Sie liegt im Bereich einer Kontaktfläche 8 auf dem Langträger 1 auf. Die Hängevorrichtung 3 und der Langträger 1 sind in diesem Bereich haken- bzw. L-förmig ausgeführt. Die Hängevorrichtung 3 wird dadurch in Richtung einer Hochachse 25 auf dem Langträger 1 gehalten bzw. es wird ein sich Lösen der Hängevorrichtung 3 von dem Langträger 1 erschwert.

Weiterhin ist die Hängevorrichtung 3 mit dem Langträger 1 verschraubt. Eine erste Sechskantschraube 16 ist durch die erste Bohrung 9 des Langträgers 1 sowie durch eine dritte Bohrung 11 in einer Seitenplatte 5 der Hängevorrichtung 3 geführt, um eine erste Längsachse 26 angeordnet und entlang dieser ausgerichtet. Die erste Längsachse 26 ist senkrecht zu der Hochachse 25 ausgerichtet. Zwischen einem Schraubenkopf und einer Sicherungsmutter ist eine erste Hülse 20 angeordnet. Weitere, gleichartige, in Fig. 2 dargestellte Schraubenverbindungen, die entlang von Parallelen zu der ersten Längsachse 26 ausgerichtet sind, sind in weiteren Bohrungen in dem Lochraster des Langträgers 1 und der Hängevorrichtung 3 angeordnet.

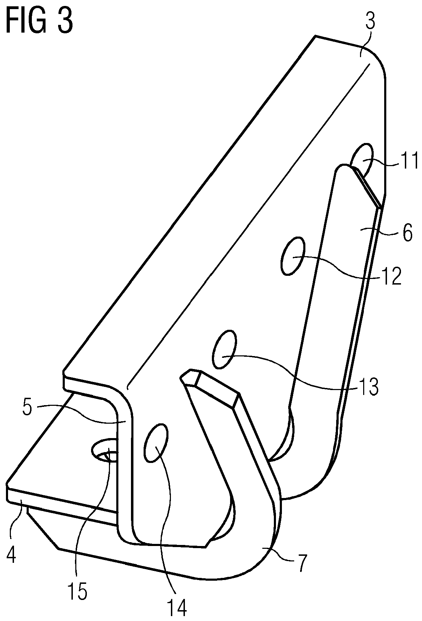

Mit der Hängevorrichtung 3 sind eine erste Versteifungsrippe 6 und eine in Fig. 3 sichtbare zweite Versteifungsrippe 7 verschweißt. Die erste Versteifungsrippe 6 liegt an einer Grundplatte 4 sowie an der Seitenplatte 5 der Hängevorrichtung 3 an.

Auf der Grundplatte 4 der Hängevorrichtung 3 liegt ein als Klimaanlage ausgeführtes Gerät 24 auf und ist über eine in Fig. 2 dargestellte vierte Sechskantschraube 19 mit der Grundplatte 4 verbunden. Das Gerät 24 ist daher redundant gegen Lösen von der Hängevorrichtung 3 gesichert.
Bei der Ausführung des Geräts 24 als Klimaanlage handelt es sich um eine günstige Lösung. Erfindungsgemäß ist es jedoch auch denkbar, das Gerät 24 als Druckluftmodul etc. auszubilden.

In Fig. 2 ist ein Schrägriss einer beispielhaften Ausführungsvariante einer erfindungsgemäßen Langträgeranordnung dargestellt.
Das gezeigte Konstruktionsprinzip entspricht jenem, das in Fig. 1 gezeigt wird. Es werden daher in Fig. 2 die gleichen Bezugszeichen wie in Fig. 1 verwendet.
Eine Hängevorrichtung 3 ist über eine erste Sechskantschraube 16 und eine erste Hülse 20, eine zweite Sechskantschraube 17 und eine zweite Hülse 21 sowie eine dritte Sechskantschraube 18 und eine dritte Hülse 22 mit einem Langträger 1 verbunden. Die Hängevorrichtung 3 liegt über eine Kontaktfläche 8 auf dem Langträger 1 auf und wird auf diesem aufgrund der Querschnittgeometrie der Hängevorrichtung 3 und des Langträgers 1 im Bereich der Kontaktfläche 8 in Richtung einer Hochachse 25 gehalten.
Mit einer Grundplatte 4 der Hängevorrichtung 3 ist über eine vierte Sechskantschraube 19 ein Gerät 24 angekoppelt.
Die vierte Sechskantschraube 19 ist um eine zweite Längsachse 27 angeordnet und entlang dieser ausgerichtet. Zwischen einem Schraubenkopf und einer Sicherungsmutter ist eine vierte Hülse 23 angeordnet.
Die zweite Längsachse 27 ist parallel zu der Hochachse 25 angeordnet.
Die Schraubenverbindungen zwischen der Hängevorrichtung 3 und dem Langträger 1 sowie dem Gerät 24 sind als dynamische Schraubenverbindungen laut den Regeln des Vereins Deutscher Ingenieure (VDI) 2230 ausgeführt. Ihre Klemmlängen sind zumindest drei- bis fünfmal so groß wie die Schraubendurchmesser.

Fig. 3 zeigt einen Schrägriss einer Hängevorrichtung 3 einer erfindungsgemäßen Langträgeranordnung. Das gezeigte Konstruktionsprinzip entspricht jenem, das in Fig. 1 und Fig. 2 dargestellt ist. Es werden daher in Fig. 3 die gleichen Bezugszeichen wie in Fig. 1 und Fig. 2 verwendet.
Die Hängevorrichtung 3 weist eine U-förmige Kontur auf. Auf einer Seitenplatte 5 sind eine dritte Bohrung 11, eine vierte Bohrung 12, eine fünfte Bohrung 13 sowie eine sechste Bohrung 14 angeordnet, über welche die Hängevorrichtung 3 mit einem in Fig. 1 und Fig. 2 dargestellten Langträger 1 verschraubt wird. Die Bohrungen sind gestanzt und entlang einer Geraden angeordnet. Dieses Bohrbild ist deckungsgleich mit einem Lochraster auf dem Langträger 1, wie es in Fig. 2 gezeigt wird.
Auf einer Grundplatte 4 der Hängevorrichtung 3 sind eine siebente Bohrung 15 sowie weitere, nicht sichtbare Bohrungen angeordnet. Über diese wird ein in Fig. 1 und Fig. 2 gezeigtes Gerät 24 mit der Hängevorrichtung 3 verschraubt.

Mit der Hängevorrichtung 3 sind eine erste Versteifungsrippe 6 und eine zweite Versteifungsrippe 7 verschweißt. Die erste Versteifungsrippe 6 und die zweite Versteifungsrippe 7 liegen an der Grundplatte 4 sowie an der Seitenplatte 5 an.

### Liste der Bezeichnungen

- 1: Langträger
- 2: Seitenfläche
- 3: Hängevorrichtung
- 4: Grundplatte
- 5: Seitenplatte
- 6: Erste Versteifungsrippe
- 7: Zweite Versteifungsrippe
- 8: Kontaktfläche
- 9: Erste Bohrung
- 10: Zweite Bohrung
- 11: Dritte Bohrung
- 12: Vierte Bohrung
- 13: Fünfte Bohrung
- 14: Sechste Bohrung
- 15: Siebente Bohrung
- 16: Erste Sechskantschraube
- 17: Zweite Sechskantschraube
- 18: Dritte Sechskantschraube
- 19: Vierte Sechskantschraube
- 20: Erste Hülse
- 21: Zweite Hülse
- 22: Dritte Hülse
- 23: Vierte Hülse
- 24: Gerät
- 25: Hochachse
- 26: Erste Längsachse
- 27: Zweite Längsachse

## Patentansprüche

1. Langträgeranordnung für einen Wagenkasten eines Fahrzeugs, insbesondere eines Schienenfahrzeugs, **dadurch gekennzeichnet, dass** zumindest ein Langträger (1) mit einem Lochraster sowie zumindest eine zu dem Lochraster schnittstellengleich gelochte Hängevorrichtung (3), die einen U-förmigen Querschnitt sowie eine U-förmige Kontur aufweist, vorgesehen sind, wobei die zumindest eine Hängevorrichtung (3) formschlüssig und kraftschlüssig mit dem zumindest einen Langträger (1) verbunden ist und im Bereich einer Kontaktfläche (8) auf dem Langträger (1) aufliegt.

2. Langträgeranordnung nach Anspruch 1, **dadurch gekennzeichnet, dass** die formschlüssige Verbindung zwischen der zumindest einen Hängevorrichtung (3) und dem zumindest einen Langträger (1) zumindest in Richtung einer Hochachse (25) vorgesehen ist.

3. Langträgeranordnung nach Anspruch 2, **dadurch gekennzeichnet, dass** die zumindest eine Hängevorrichtung (3) und der zumindest eine Langträger (1) im Bereich der Kontaktfläche (8) zwischen der zumindest einen Hängevorrichtung (3) und dem zumindest einen Langträger (1) L-förmig ausgebildet sind.

4. Langträgeranordnung nach einem der Ansprüche 1, 2 oder 3, **dadurch gekennzeichnet, dass** die kraftschlüssige Verbindung zwischen der zumindest einen Hängevorrichtung (3) und dem zumindest einen Langträger (1) zumindest in Richtung einer ersten Längsachse (26) vorgesehen ist.

5. Langträgeranordnung nach einem der Ansprüche 1, 2, 3 oder 4, **dadurch gekennzeichnet, dass** die zumindest eine Hängevorrichtung (3) zumindest eine erste Versteifungsrippe (6) aufweist.

6. Langträgeranordnung nach einem der Ansprüche 1, 2, 3, 4 oder 5, **dadurch gekennzeichnet, dass** zumindest ein Gerät (24) formschlüssig und kraftschlüssig zumindest in Richtung einer zweiten Längsachse (27) mit der zumindest einen Hängevorrichtung (3) verbunden ist.

7. Langträgeranordnung nach Anspruch 6, **dadurch gekennzeichnet, dass** das zumindest eine Gerät (24) auf der zumindest einen Hängevorrichtung (3) aufliegt.

## Claims

1. Sole bar arrangement for a body of a vehicle, in particular a rail vehicle, **characterised in that** at least one sole bar (1) having a hole pattern and at least one suspension apparatus (3) which is perforated in an interface-identical manner to the hole pattern and has a U-shaped cross-section as well as a U-shaped contour, are provided, wherein the at least one suspension apparatus (3) is interlockingly and frictionally connected to the at least one sole bar (1) and rests on the sole bar (1) in the region of a contact surface (8) .

2. Sole bar arrangement according to claim 1, **characterised in that** the interlocking connection between the at least one suspension apparatus (3) and the at least one sole bar (1) is provided at least in the direction of a vertical axis (25).

3. Sole bar arrangement according to claim 2, **characterised in that** the at least one suspension apparatus (3) and the at least one sole bar (1) are realised in an L-shape in the region of a contact surface (8) between the at least one suspension apparatus (3) and the at least one sole bar (1).

4. Sole bar arrangement according to one of claims 1, 2 or 3, **characterised in that** the frictional connection between the at least one suspension apparatus (3) and the at least one sole bar (1) is provided at least in the direction of a first longitudinal axis (26).

5. Sole bar arrangement according to one of claims 1, 2, 3 or 4, **characterised in that** the at least one suspension apparatus (3) has at least a first stiffening rib (6).

6. Sole bar arrangement according to one of claims 1, 2, 3, 4 or 5, **characterised in that** at least one device (24) is interlockingly and frictionally connected to the at least one suspension apparatus (3) at least in the direction of a second longitudinal axis (27).

7. Sole bar arrangement according to claim 6, **characterised in that** the at least one device (24) rests on the at least one suspension apparatus (3).

## Revendications

1. Agencement de longeron pour une caisse d'un véhicule, en particulier de véhicule ferroviaire, **caractérisé en ce qu'**au moins un longeron (1) avec une trame perforée et au moins un dispositif de suspension (3) perforé à la même interface que la trame perforée, qui présente une section transversale en forme de U et un contour en forme de U, sont prévus, dans lequel le au moins un dispositif de suspension (3) est relié par complémentarité de forme et par friction avec le au moins un longeron (1) et repose sur le longeron (1) dans la région d'une surface de contact (8).

2. Agencement de longeron selon la revendication 1, **caractérisé en ce que** la liaison par complémentarité de forme entre le au moins un dispositif de suspension (3) et le au moins un longeron (1) est prévue au moins dans la direction d'un axe vertical (25).

3. Agencement de longeron selon la revendication 2, **caractérisé en ce que** le au moins un dispositif de suspension (3) et le au moins un longeron (1) sont réalisés en forme de L dans la région de la surface de contact (8) entre le au moins un dispositif de suspension (3) et le au moins un longeron (1).

4. Agencement de longeron selon l'une quelconque des revendications 1, 2 ou 3, **caractérisé en ce que** la liaison par friction entre le au moins un dispositif de suspension (3) et le au moins un longeron (1) est prévue au moins dans la direction d'un premier axe longitudinal (26).

5. Agencement de longeron selon l'une quelconque des revendications 1, 2, 3 ou 4, **caractérisé en ce que** le au moins un dispositif de suspension (3) présente au moins une première nervure de rigidification (6).

6. Agencement de longeron selon l'une quelconque des revendications 1, 2, 3, 4 ou 5, **caractérisé en ce qu'**au moins un appareil (24) est relié au au moins un dispositif de suspension (3) par complémentarité de forme et par friction au moins dans la direction d'un second axe longitudinal (27).

7. Agencement de longeron selon la revendication 6, **caractérisé en ce que** le au moins un appareil (24) repose sur le au moins un dispositif de suspension (3).
